# EUROPEAN PATENT SPECIFICATION

(11) **EP 2 368 303 B1**
(45) Date of publication and mention of the grant of the patent: **01.06.2016**
(21) Application number: 09833689.4
(22) Date of filing: 17.12.2009
(51) Int. Cl.: H02H 3/00, H02J 3/38, H02J 11/00

(54) **ISLANDING DETECTION SYSTEM**
SYSTEM ZUR ERKENNUNG VON INSELBILDUNG
SYSTÈME DE DÉTECTION D'ÎLOTAGE

(30) Priority: 17.12.2008 NZ 57374808
(43) Date of publication of application: 28.09.2011
(73) Proprietor: SUMA ALGEBRAICA S.L., 20550 Aretxabaleta (ES)
(72) Inventor: KUMAR, Vinod, Christchurch 8011 (NZ); BAKER, Joshua, Christchurch 8053 (NZ)
(74) Representative: Igartua, Ismael
(86) International application number: PCT/NZ2009/000294
(87) International publication number: WO 2010/071457

(56) References cited:
- EP-A1- 1 278 282
- US-A1- 2003 098 671
- US-A1- 2003 147 191
- US-A1- 2005 254 191
- US-A1- 2007 093 978
- US-A1- 2008 122 293
- ROHIT S KUNTE ET AL: "Comparison and review of islanding detection techniques for distributed energy resources", POWER SYMPOSIUM, 2008. NAPS '08. 40TH NORTH AMERICAN, IEEE, PISCATAWAY, NJ, USA, 28 September 2008 (2008-09-28), pages 1-8, XP031558601, ISBN: 978-1-4244-4283-6
- KLIBER J ET AL: "Local anti-islanding protection for distributed generators based on impedance measurements", ELECTRIC POWER CONFERENCE, 2008. EPEC 2008. IEEE CANADA, IEEE, PISCATAWAY, NJ, USA, 6 October 2008 (2008-10-06), pages 1-5, XP031413755, ISBN: 978-1-4244-2894-6

## Description

### FIELD OF THE INVENTION

The invention generally relates to an islanding detection system and particularly, although not exclusively, to an islanding detection system used to detect when a distributed generator is in an islanding condition.

### BACKGROUND OF THE INVENTION

An electrical grid is energised primarily by generators owned and operated by utility companies. Independent generation sources such as photovoltaics, micro turbines or micro combined heat and power units (mCHP) may also be connected to the grid. These secondary power sources are referred to as distributed generators (DG) and are commonly operated at an individual household level. A household that operates a DG can either use the power generated (usually supplemented by the grid) or feed power back into the grid. Islanding occurs when the electrical grid power supply fails, leaving a branch of the electrical grid primarily energised by one or more DGs, which can lead to dangerous conditions. Anti-islanding schemes are implemented to detect islanding and disconnect any DGs energising the branch.

Anti-islanding schemes can be either active, which involves signal injection into the electrical grid and monitoring the resulting signals, or passive, which involves monitoring the signals that are pre-existing on the electrical grid. Active schemes involve a trade-off between islanding detection time and distortion caused in the output current waveform, as faster detection methods generally cause more total harmonic distortion.

The document "Comparison and review of islanding detection techniques for distributed energy resources" discloses different islanding detection methods for anti-islanding protection in power systems, such as methods using passive techniques which are based on information at the local site.

It is an object of the present invention to provide an improved islanding detection system, or to at least provide the public with a useful choice.

### SUMMARY OF THE INVENTION

In a first aspect the invention broadly consists in an islanding detection system for a distributed generator arranged to be connected to the electrical grid comprising:
a first arm operable to be connected between the phase connection and the neutral connection of the electrical grid;
a second arm operable to be connected between the phase connection and the neutral connection of the electrical grid, the first arm comprising a higher impedance than the second arm; and
a controller arranged to connect the higher impedance arm and sense the current through it, and to connect the lower impedance arm and sense the current through it; and to disconnect the distributed generator from the electrical grid in the event that the sensed current in the lower impedance arm is similar to the sensed current in the higher impedance arm.

Preferably, the impedance of the higher impedance arm is substantially resistive.

Preferably, the resistance of the higher resistance arm is approximately one ohm.

Preferably, the islanding detection system comprises a current sensing arm provided between the higher and lower impedance arms and the neutral, the current sensing arm comprising known impedance.

Preferably, the controller is arranged to detect the voltage over the current sensing arm and to use the voltage value and the known impedance value to calculate the current value through the current sensing arm.

Preferably, the islanding detection system comprises a switch operable to connect and disconnect the higher impedance arm between the phase connection and the neutral connection of the electrical grid.

Preferably, the islanding detection system comprises a switch operable to connect and disconnect the lower impedance arm between the phase connection and the neutral connection of the electrical grid.

Preferably, the controller is arranged to disconnect the distributed generator from the grid in the event that the sensed current in the lower impedance arm is similar or equal to the sensed current in the higher impedance arm.

Preferably, the controller is arranged to sense the voltage of the phase connection of the electrical grid.

Preferably, the controller is arranged to reconnect the distributed generator to the electrical grid in the event that the electrical grid is still supplying power a period of time after a detected islanding condition.

In a second aspect the invention broadly consists in a distributed generator arranged to be connected to an electrical grid comprising an islanding detection system comprising:
a first arm operable to be connected between the phase connection and the neutral connection of the electrical grid;
a second arm operable to be connected between the phase connection and the neutral connection of the electrical grid, the first arm comprising a higher impedance than the second arm; and
a controller arranged to connect the higher resistance arm and sense the current through it, and to connect the lower impedance arm and sense the current through it; and to disconnect the distributed generator from the electrical grid in' the event that the sensed current in the lower impedance arm is similar to the sensed current in the higher resistance arm.

Preferably, the impedance of the higher impedance arm is substantially resistive.

Preferably, the impedance of the higher resistance arm is equal to or less than one ohm.

Preferably, the distributed generator comprises a current sensing arm.

Preferably, the distributed generator according comprises a switch operable to connect and disconnect the higher impedance arm between the phase connection and the neutral connection of the electrical grid.

Preferably, the distributed generator comprises a switch operable to connect and disconnect the lower impedance arm between the phase connection and the neutral connection of the electrical grid.

Preferably, the controller is arranged to disconnect the distributed generator from the grid in the event that the sensed current in the lower impedance arm is similar or equal to the sensed current in the higher impedance arm.

Preferably, the controller is arranged to sense the voltage of the phase connection of the electrical grid.

Preferably, the controller is arranged to reconnect the distributed generator to the electrical grid in the event that the electrical grid is still supplying power a period of time after a detected islanding condition.

Preferably, the distributed generator is a micro combined heat and power unit.

In a third aspect the invention broadly consists in a method of disconnecting a distributed generator from an electrical grid comprising:
switching a first arm between the phase connection and the neutral connection of the electrical grid and sensing the current through the first arm;
switching a second arm between the phase connection and the neutral connection of the electrical grid and sensing the current through the second arm, the first arm comprising a higher resistance than the second arm; and
comparing the current through the higher resistance arm with the current through the lower resistance arm and disconnecting the distributed generator from the electrical grid in the event that the sensed currents are the same or similar.

Preferably, the average current through the higher resistance arm is compared with the current through the lower resistance arm.

The term "comprising" as used in this specification means "consisting at least in part of". When interpreting each statement in this specification that includes the term "comprising", features other than that or those prefaced by the term may also be present. Related terms such as "comprise" and "comprises" are to be interpreted in the same manner.

The invention consists in the foregoing and also envisages constructions of which the following gives examples only.

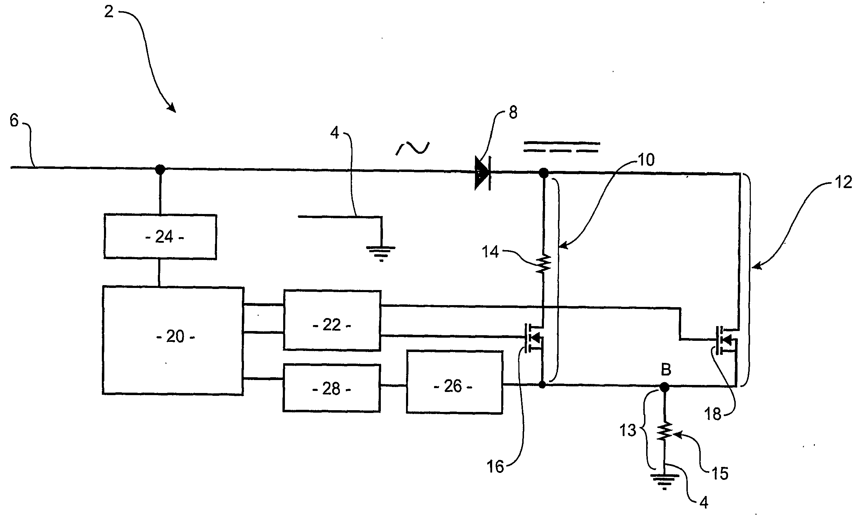

### BRIEF DESCRIPTION OF THE DRAWING

Preferred embodiments of the invention will be described by way of example only and with reference to the drawing which is a schematic of the preferred form islanding detection system of the invention.

### DETAILED DESCRIPTION OF PREFERRED EMBODIMENTS

The invention generally relates to an islanding detection system for use in a distributed generator that is connected to the electrical grid. The system detects if the electrical grid has stopped providing power, so that the distributed generator can be disconnected in order to avoid an islanding condition. The islanding detection system comprises a first arm and a second arm which are switched into the system in turn and the current through each arm sensed, the first arm comprising a higher impedance than the second arm. If the current through each arm is similar, the electrical grid has failed and an islanding condition has occurred.

Referring to the figure, an islanding detection system 2 may be provided in a distributed generator (DG). The DG may be a micro combined heat and power unit or any other suitable DG. The DG may be arranged to be connected to and supply or receive electrical power from the domestic power supply or electrical grid. When the DG is connected to the electrical grid, and the electrical grid fails to supply power such as during blackouts, it is desirable to disconnect the DG to avoid islanding. It may be possible to detect whether the electrical grid has stopped supplying power by monitoring its resistance. A one ohm step increase in the electrical grid's resistance may indicate that the electrical grid has stopped supplying power.

The islanding detection system 2 is connected to the neutral connection 4 and the phase 6 connection of the electrical grid. Power may be supplied by the electrical grid at 230V at 50Hz, however any suitable voltage and frequency may be supplied. The power may be rectified from AC to DC by a rectifier 8. The rectifier 8 may be a half-wave rectifier, or a full-wave rectifier, or any other suitable rectifier.

The islanding detection system 2 comprises a higher impedance arm 10 and a lower impedance arm 12. Preferably, the higher impedance arm 10 and the lower impedance arm 12 are electrically parallel to one another. The higher impedance arm 10 comprises a first resistor 14. Preferably, the higher impedance arm 10 is purely resistive. Preferably, the first resistor 14 is a 0.82Ω resistor, however any suitable resistor may be used. The higher impedance arm 10 is operable to be connected and disconnected between the phase connection 6 and the neutral connection 4 of the electrical grid. Preferably, the higher impedance arm 10 comprises a first switch 16 that is operable to connect and disconnect the higher impedance arm 10 between the phase 6 and the neutral 4. Preferably, the lower impedance arm 12 has minimal impedance. This means that providing unnecessary elements in the lower impedance arm 12 should be avoided. The lower impedance arm 12 is operable to be connected and disconnected between the phase 6 and the neutral 4. Preferably, the lower impedance arm 12 comprises a second switch 18 that is operable to connect and disconnect the lower impedance arm 12 between the phase 6 and the neutral 4. Preferably, the switches 16, 18 are transistors, however any suitable switch may be used. Preferably the switches 16, 18 are MOSFETs, however other FETs, BJTs, or any other suitable transistors may be used: The higher impedance arm 10 and the lower impedance arm 12 should be considered to be connected between phase and neutral regardless of whether or not the arm makes a direct connection between phase and neutral or whether there are additional elements in between.

The switches 16, 18 may be controlled by a controller 20. Preferably, the controller is a microcontroller or a microprocessor, however any suitable controller may be used such as an application specific integrated. circuit, hard wired logic circuitry or other hardware, or any other suitable controller. More preferably, the controller is a micro controller or microprocessor with associated software arranged to change the state of the switches 16, 18: The controller 20 may control the switches 16, 18 through a driver 22. A voltage level detector 24 may be connected between the phase connection 6 and the controller 20.

Preferably, the voltage level detector 24 is a 10V voltage level detector, however any suitable voltage level detector may be used. The voltage level detector may send a signal to the controller 20 on each occasion that the phase connection 6 passes a certain voltage level, such as 10V. The controller 20 may be powered from the phase connection 6. A regulator may be provided to convert the phase 6:voltage to a voltage suitable to power the controller 20.

The islanding detection system 2 is arranged to sense current flow through the higher impedance arm 10 and current flow through the lower impedance arm 12. In the preferred form, the islanding detection system 2 comprises a current sensing arm 13 connected between the higher and lower impedance arms 10, 12 and neutral 4. An electrical node B may be defined between the higher and lower impedance arms 10, 12 and the current sensing arm 13. The current sensing arm 13 may comprise a second resistor 15. The value of the second resistor 15 may be small so that the voltage at node B does not rise past a certain level, such as 2V as this could cause the switches 16, 18 to malfunction. Preferably, the second resistor is 0.22Ω, however any suitable value may be used. The current through the current sensing arm 13 may be determined by the controller 20. The controller 20 may measure the voltage across the current sensing arm 13 by measuring the voltage at node B. The voltage may be amplified by an amplifier 26 and then converted to a digital representation suitable for the controller 20 by an analog-to-digital converter 28. The current through the current sensing arm 13 can then be calculated with Ohm's law, as the impedance of the current sensing arm 13 is known. Alternatively, the voltage level at node B may be used directly without converting to current, and in this specification this should be considered as current sensing. However, the current flow through the higher impedance arm 10 and the current flow through the lower impedance arm 12 may be measured in suitable way, for example with a current sensing coil.

In order to determine the resistance of the electrical grid, the higher and lower impedance arms 10, 12 are successively and temporarily switched in between the phase 6 and neutral 4. Preferably, each of the higher and lower impedance arms 10, 12 are switched in for between 10 and 350 microseconds in order to sense the current. Generally, the higher and lower impedance arms 10, 12 may be switched in for a longer time if the electrical grid is more inductive. The higher and lower impedance arms 10, 12 may be switched in for any suitable time period. In the preferred form, both switches 16, 18 are initially turned off, meaning that the higher 10 and lower 12 impedance arms and the current sensing arm 13 are switched out of the circuit. The controller 20 may change the state of the first switch 16 to switch, the higher impedance arm 10 in to the circuit to allow a current to flow-through that arm and the current sensing arm 13 to neutral 4. The level of the current is sensed and stored for later use. Preferably, the controller has a memory to store the value of the current. The memory may be flash memory, or random access memory, or any other suitable type of memory. The controller 20 may then change the state of the first switch 16 again to switch the higher impedance arm 10 out of the circuit. There may be a period where both the higher 10 and lower 12 impedance arms are switched out of the circuit. The controller 20 may then change the state of the second switch 18 to switch the lower impedance arm 12 in to the circuit to allow a current to flow through that arm and the current sensing arm 13 to neutral 4. The level of the current is sensed and stored for later use. The controller 20 may then change the state of the second switch 18 again, to switch the lower impedance arm 12 out of the circuit.

The resistance of the electrical grid may have undergone a step change of one ohm when the average current through the higher 10 impedance arm is similar to current through the lower impedance arm 12. This condition may indicate that the electrical grid is not supplying power and that the DG should be disconnected to avoid islanding. The controller 20 may compare the two stored current values. Preferably, the controller 20 may be arranged to disconnect the DG from the electrical grid if the sensed current through the lower impedance arm 12 is equal to the sensed current through the higher impedance arm 10. The stored current values may be compared in any suitable way. The islanding detection system 2 may comprise a switch arranged to disconnect the DG from the electrical grid. The switch may be controlled by the controller 20 and may be a power transistor, a solenoid, or any other suitable switch.

The method of detecting a resistance step change may be executed in any suitable order. Current value comparison may occur after every occasion that a new current value is sensed. Alternatively, current value comparison may occur after new current values have been sensed for both arms. Preferably, each of the higher and lower resistance arms 10, 12 are switched in five times every second. For example, the higher resistance arm 10 may be switched in in a particular cycle, and the lower resistance arm 12 may be switched in in the next cycle. In a 50Hz system, the higher resistance arm 10 may be switched in again after 10 cycles. The cycles may be counted by the controller 20 using signals from the voltage level detector 24.

The value of resistor 14 may be changed in order to detect a different value step change in the resistance of the electrical grid. The step change detected may be proportional to the resistance of the higher resistance arm 10. For example, if resistor 14 was 2Ω, a step change of the resistance of the electrical grid of 2Ω has occurred when the currents through the higher 10 and lower 12 resistance arms are equal. A step change of impedance or resistance of any suitable value may be detected by changing the value of resistor 14.

The controller 20 may be arranged to sense the voltage of the phase connection 6 after detecting that the electrical grid is not supplying power. This may be preferable in cases where the electrical grid is highly inductive. The islanding detection system 2 may wrongly disconnect the DG in cases where the electrical grid is highly inductive. If a phase voltage is detected a period of time after disconnection of the DG, it may suggest that the electrical grid is still supplying power and that the DG should not have been disconnected. The DG may then be reconnected to the electrical grid. Preferably, the period of time is 5 seconds or longer.

The foregoing description of the invention includes preferred forms thereof. Modifications may be made thereto without departing from the scope of the invention as defined in the appended claims.

## Claims

1. An islanding detection system (2) for a distributed generator (DG) arranged to be connected to an electrical grid, **characterized in that** it comprises
a first arm (10) operable to be connected between the phase connection (6) and the neutral connection (4) of the electrical grid;
a second arm (12) operable to be connected between the phase connection (6) and the neutral connection (4) of the electrical grid, the first arm (10) comprising a higher impedance than the second arm (12); and
a controller (20) arranged to connect the higher impedance arm (10) and sense the current through it, and to connect the lower impedance arm (12) and sense the current through it, and to disconnect the distributed generator (DG) from the electrical grid in the event that the sensed current in the lower impedance arm (12) is similar or equal to the sensed current in the higher impedance arm (10).

2. An islanding detection system according to claim 1, where the impedance of the higher impedance arm (10) is substantially resistive.

3. An islanding detection system according to claim 2, where the impedance of the higher resistance arm (10) is equal to or less than one ohm.

4. An islanding detection system according to anyone of claims 1 to 3, comprising a current sensing arm (13) provided between the higher and lower impedance arms (10, 12) and the neutral (4), the current sensing arm (13) comprising a known impedance.

5. An islanding detection system according to claim 4, wherein the controller (20) is arranged to detect the voltage over the current sensing arm (13) and to use the voltage value and the known impedance value to calculate the current value through the current sensing arm (13).

6. An islanding detection system according to anyone of claims 1 to 5, comprising a switch (16) operable to connect and disconnect the higher impedance arm (10) between the phase (6) connection and the neutral (4) connection of the electrical grid.

7. An islanding detection system according to anyone of claims 1 to 6, comprising a switch (18) operable to connect and disconnect the low impedance arm (12) between the phase (6) connection and the neutral (4) connection of the electrical grid.

8. An islanding detection system according to anyone of claims 1 to 7, wherein the controller (20) is arranged to disconnect the distributed generator (DG) from the grid in the event that the sensed current in the lower impedance arm (12) is similar or equal to the sensed current in the higher impedance arm (10).

9. An islanding detection system according to anyone of claims 1 to 8, where the controller (20) is arranged to sense the voltage of the phase (6) connection of the electrical grid.

10. An islanding detection system according to claim 9, wherein the controller (20) is arranged to reconnect the distributed generator (DG) to the electrical grid in the event that the electrical grid is still supplying power a period of time after a detected islanding condition.

11. A distributed generator **characterized in that** it comprises an islanding detection system (2) according to any of claims 1 to 10.

12. A distributed generator according to claim 11, wherein the distributed generator (DG) is a micro combined heat and power unit.

13. A method of disconnecting a distributed generator (DG) from an electrical grid, **characterized in that** it comprises the steps of:
switching a first arm (10) between the phase (6) connection and the neutral (4) connection of the electrical grid and sensing the current through the first arm (10);
switching a second arm (12) between the phase (6) connection and the neutral (4) connection of the electrical grid and sensing the current through the second arm (12), the first arm (10) comprising a higher impedance than the second arm (12); and
comparing the current through the higher impedance arm (10) with the current through the lower impedance arm (12) and disconnecting the distributed generator (DG) from the electrical grid in the event that the sensed currents are the same or similar.

14. A method of disconnecting a distributed generator from an electrical grid according to claim 13, wherein the average current through the higher impedance arm (10) is compared with the current through the lower impedance arm (12).

## Patentansprüche

1. System (2) zu Erkennung von Inselbildung für einen dezentralen Erzeuger (DG), das zum Anschluss an ein Stromnetz angeordnet ist, **dadurch gekennzeichnet, dass** es umfasst:
einen ersten Arm (10) zur Verbindung zwischen dem Phasenanschluss (6) und dem neutralen Anschluss (4) des Stromnetzes;
einen zweiten Arm (12) zur Verbindung zwischen dem Phasenanschluss (6) und dem neutralen Anschluss (4) des Stromnetzes, wobei der erste Arm (10) eine höhere Impedanz aufweist als der zweite Arm (12); und
eine Steuerung (20), die zum Anschluss des Arms (10) mit höherer Impedanz und zur Erfassung des Stroms durch diesen, sowie zum Anschluss des Arms (12) mit geringerer Impedanz und zur Erfassung des Stroms durch diesen, sowie zur Trennung des dezentralen Erzeugers (DG) vom Stromnetz, wenn der erfasste Strom im Arm (12) ähnlich oder gleich dem erfassten Strom im Arm (10) ist, angeordnet ist.

2. System nach Anspruch 1, wobei die Impedanz des Arms (10) im Wesentlichen widerstandsfähig ist.

3. System nach Anspruch 2, wobei die Impedanz des Arms (10) kleiner oder gleich 1 Ohm ist.

4. System nach einem der Ansprüche 1 - 3, umfassend einen zwischen den Armen (10, 12) und dem neutralen Anschluss (4) vorgesehen Stromerfassungsarm (13), wobei der Stromerfassungsarm (13) eine bekannte Impedanz umfasst.

5. System nach Anspruch 4, wobei die Steuerung (20) zur Erfassung der Spannung über den Stromerfassungsarm (13) und zur Berechnung des Stromwerts des Stromerfassungsarms (13) anhand des Spannungswerts und des bekannten Impedanzwerts angeordnet ist.

6. System nach einem der Ansprüche 1 - 5, umfassend einen Schalter (16) zum Anschließen und Trennen des Arms (10) mit höherer Impedanz zwischen dem Phasenanschluss (6) und dem neutralen Anschluss (4) des Stromnetzes.

7. System nach einem der Ansprüche 1 - 6, umfassend einen Schalter (18) zum Anschließen und Trennen des Arms (12) mit geringer Impedanz zwischen dem Phasenanschluss (6) und dem neutralen Anschluss (4) des Stromnetzes.

8. System nach einem der Ansprüche 1 - 7, wobei die Steuerung (20) zur Trennung des dezentralen Erzeugers (DG) vom Netz angeordnet ist, wenn der erfasste Strom im Arm (12) ähnlich oder gleich dem erfassten Strom im Arm (10) ist.

9. System nach einem der Ansprüche 1 - 8, wobei die Steuerung (20) zur Erfassung der Spannung des Phasenanschlusses (6) des Stromnetzes angeordnet ist.

10. System nach Anspruch 9, wobei die Steuerung (20) derart angeordnet ist, dass sie den dezentralen Erzeuger (DG) wieder an das Stromnetz anschließt, wenn das Stromnetz nach Ablauf einer bestimmten Zeit nach der Erkennung einer Inselbildung immer noch Strom zuführt.

11. Dezentraler Erzeuger, **dadurch gekennzeichnet, dass** er ein System (2) nach einem der Ansprüche 1 - 10 umfasst.

12. Erzeuger nach Anspruch 11, wobei der dezentraler Erzeuger (DG) eine kombinierte Heizungs- und Strom-Mikroanlage ist.

13. Verfahren zum Trennen eines dezentralen Erzeugers (DG) von einem Stromnetz, **dadurch gekennzeichnet, dass** es die nachfolgenden Schritte umfasst:
Umschalten eines ersten Arms (10) zwischen dem Phasenanschluss (6) und dem neutralen Anschluss (4) des Stromnetzes und Erfassen des Stroms durch den ersten Arm (10);
Umschalten eines zweiten Arms (12) zwischen dem Phasenanschluss (6) und dem neutralen Anschluss (4) des Stromnetzes und Erfassen des Stroms durch den zweiten Arm (12), wobei der erste Arm (10) eine höhere Impedanz umfasst als der zweite Arm (12) und;
Vergleichen des Stroms durch den Arm (10) mit dem Strom durch den Arm (12) und Trennen des dezentralen Erzeugers (DG) vom Stromnetz, wenn die erfassten Ströme gleich oder ähnlich sind.

14. Verfahren zum Trennen eines dezentralen Erzeugers von einem Stromnetz nach Anspruch 13, wobei der durchschnittliche Strom durch den Arm (10) mit dem Strom durch den Arm (12) verglichen wird.

## Revendications

1. Système de détection d'îlotage (2) pour un générateur distribué (DG) conçu pour être connecté à un réseau électrique, **caractérisé en ce qu**'il comprend :
un premier bras (10) destiné à être connecté entre la connexion de phase (6) et la connexion neutre (4) du réseau électrique ;
un deuxième bras (12) destiné à être connecté entre la connexion de phase (6) et la connexion neutre (4) du réseau électrique, le premier bras (10) présentant une impédance supérieure à celle du deuxième bras (12) ; et
un contrôleur (20) conçu pour connecter le bras d'impédance supérieure (10) et détecter le courant qui le traverse et pour connecter le bras d'impédance inférieure (12) et détecter le courant qui le traverse et pour déconnecter le générateur distribué (DG) du réseau électrique dans le cas où le courant détecté dans le bras d'impédance inférieure (12) est similaire ou égal au courant détecté dans le bras d'impédance supérieure (10).

2. Système de détection d'îlotage selon la revendication 1, dans lequel l'impédance du bras d'impédance supérieure (10) est essentiellement résistive.

3. Système de détection d'îlotage selon la revendication 2, dans lequel l'impédance du bras d'impédance supérieure (10) est inférieure ou égale à un ohm.

4. Système de détection d'îlotage selon l'une des revendications 1 à 3, comprenant un bras de détection de courant (13) prévu entre les bras d'impédance supérieure et inférieure (10, 12) et le neutre (4), le bras de détection de courant (13) présentant une impédance connue.

5. Système de détection d'îlotage selon la revendication 4, dans lequel le contrôleur (20) est conçu pour détecter la tension sur le bras de détection de courant (13) et pour utiliser la valeur de tension et la valeur d'impédance connue pour calculer la valeur de courant à travers le bras de détection de courant (13).

6. Système de détection d'îlotage selon l'une des revendications 1 à 5, comprenant un interrupteur (16) conçu pour connecter et déconnecter le bras d'impédance supérieure (10) entre la connexion de phase (6) et la connexion neutre (4) du réseau électrique.

7. Système de détection d'îlotage selon l'une des revendications 1 à 6, comprenant un interrupteur (18) conçu pour connecter et déconnecter le bras d'impédance inférieure (12) entre la connexion de phase (6) et la connexion neutre (4) du réseau électrique.

8. Système de détection d'îlotage selon l'une des revendications 1 à 7, dans lequel le contrôleur (20) est conçu pour déconnecter le générateur distribué (DG) du réseau dans le cas où le courant détecté dans le bras d'impédance inférieure (12) est similaire ou égal au courant détecté dans le bras d'impédance supérieure (10).

9. Système de détection d'îlotage selon l'une des revendications 1 à 8, dans lequel le contrôleur (20) est conçu pour détecter la tension de la connexion de phase (6) du réseau électrique.

10. Système de détection d'îlotage selon la revendication 9, dans lequel le contrôleur (20) est conçu pour reconnecter le générateur distribué (DG) au réseau électrique dans le cas où le réseau électrique fournit toujours de l'énergie pendant une période après qu'un état d'îlotage a été détecté.

11. Générateur distribué **caractérisé en ce qu**'il comprend un système de détection d'îlotage (2) selon l'une des revendications 1 à 10.

12. Générateur distribué selon la revendication 11, dans lequel le générateur distribué (DG) est une unité thermique et de puissance micro-combinée.

13. Procédé de déconnexion d'un générateur distribué (DG) d'un réseau électrique, **caractérisé en ce qu**'il comprend les étapes suivantes :
commutation d'un premier bras (10) entre la connexion de phase (6) et la connexion neutre (4) du réseau électrique et détection du courant traversant le premier bras (10) ;
commutation d'un deuxième bras (12) entre la connexion de phase (6) et la connexion neutre (4) du réseau électrique et détection du courant traversant le deuxième bras (12), le premier bras (10) présentant une impédance supérieure à celle du deuxième bras (12) ; et
comparaison du courant traversant le bras d'impédance supérieure (10) avec le courant traversant le bras d'impédance inférieure (12) et déconnexion du générateur distribué (DG) du réseau électrique dans le cas où les courants détectés sont identiques ou similaires.

14. Procédé de déconnexion du générateur distribué d'un réseau électrique selon la revendication 13, dans lequel le courant moyen traversant le bras d'impédance supérieure (10) est comparé avec le courant traversant le bras d'impédance inférieure (12).
